# EUROPEAN PATENT SPECIFICATION

(11) **EP 3 571 934 B1**
(45) Date of publication and mention of the grant of the patent: **06.01.2021**
(21) Application number: 18173886.5
(22) Date of filing: 23.05.2018
(51) Int. Cl.: B65D 25/14, A23L 2/64, C12G 3/06, A47G 19/22, A23L 2/56, B65D 85/72, A23L 27/00

(54) **USE OF A COMPOSITION FOR PROVIDING A SCENT ON THE INSIDE OF A DRINKING VESSEL**
VERWENDUNG EINER ZUSAMMENSETZUNG ZUR BEREITSTELLUNG EINES DUFTES AUF DER INNENSEITE EINES TRINKGEFÄSSES
UTILISATION D'UNE COMPOSITION POUR FOURNIR UN PARFUM SUR L'INTÉRIEUR D'UN RÉCIPIENT À BOIRE

(43) Date of publication of application: 27.11.2019
(73) Proprietor: Urban, Alexander, 10827 Berlin (DE); Le Febvre, Marie, 10827 Berlin (DE)
(72) Inventor: Urban, Alexander, 10827 Berlin (DE); Le Febvre, Marie, 10827 Berlin (DE)
(74) Representative: Müller-Boré & Partner Patentanwälte PartG mbB

(56) References cited:
- WO-A1-99/64323
- WO-A1-2010/027969
- WO-A2-2011/043889
- US-A- 5 932 262
- US-A1- 2013 302 477

## Description

The present invention relates to a method for providing a beverage comprising the use of a composition for providing a scent on the inside of a drinking vessel.

Essential oils, essences or extracts of plants are commonly used as ingredients in perfumes or scents. Further, also some of such compounds are added to food for enhancing the taste. Due to this use of perfume components in food, surprising and unconventional combinations of flavors could be created which lead to a new field of creative cooking. However, until now, the focus has mainly been on influencing the taste of food while the effect on beverages has been neglected so far.

Further, usually when drinking, retro nasal perception of odors emanate through the oral cavity, but by adding the dimension of orthonasal olfaction during the drinking process, a new drinking experience could be achieved.

WO2011043889 discloses a beverage container that provides a flavor delivery system capable of delivering a burst of flavor when a drinker places her mouth to portions of the beverage container. US2013302477 discloses a package for beverage such as drinkable liquid which has vent opening and which is configured to provide aromatic gas to consumer. WO9964323 discloses a device and method for adding the perception of flavoring to a product that is consumed from a receptacle. WO2010027969 discloses a method for modifying flavor experience via aroma delivery including applying at least one aroma on a comestible's packaging. US5932262 discloses flavored nipple for infant feed bottle.

Thus, the problem underlying the present invention is to provide a method for providing a beverage comprising the use of a composition which enables influencing the taste of the beverage and that not only stimulates retro nasal perception, but also orthonasal olfaction for creating a new drinking experience.

The solution to the above technical problem is achieved by the embodiments characterized in the claims.

The present invention relates to a method for providing a beverage wherein a composition is sprayed on the inside of the drinking vessel in an amount of from 50 µl to 300 µl, wherein the composition comprises a solvent in an amount of from 50 vol% to 99 vol% based on the composition, and a compound in an amount of from 1 vol% to 50 vol% based on the composition, wherein the compound is at least one member selected from the group consisting of agarwood oil, algae absolute green, almond oil sweet, ambrette seed CO₂ extract, ambrette seed oil, amyris oil, angelica root oil, anise oil, armoise oil, basil oil, beeswax absolute, benzoin absolute, benzoin resinoid, bergamot oil, birch tar oil, blackcurrent absolute, buchu oil, caraway seed oil, cardamom absolute, cardamom oil, carrot seed oil, cassia bark oil, cassia leaf oil, cassis bud oil, cedarwood oil, cedar leaf oil, celery seed oil, chamomile oil, cinnamon bark oil, cinnamon leaf oil, citronella oil, clary sage absolute super, clary sage oil, clove bud oil, clove leaf oil, cocoa absolute, coffee bean extract, cognac oil, copaiba balsam oil, coriander oil, cornmint oil redistilled, cumin seed oil, cypress oil, cypriol oil, elemi oil, elderflower absolute, elderflower oil, estragon oil, eucalyptus oil, fennel oil, fenugreek absolute, fenugreek resinoid, galbanum oil, galbanum resinoid, geranium oil, ginger CO₂ extract, ginger oil, grapefruit oil expressed, guaiac wood oil, honey absolute, hyssop oil super, immortelle flower absolute, jasmine CO₂ extract, jasmine sambac absolute, juniper berry oil, labdanum oil, lavandin abrialis oil, lavandin oil grosso, lavender absolute, lavender oil, lavender oil spike, lemon cedrat oil, lemon oil, lemongrass oil, lemon mint oil, lime oil, liquorice, litsea cubeba fruit oil, magnolia alba flower oil, mandarin oil, mate yerba absolute, mentha citrata oil, mimosa absolute, myrrh resinoid, myrtle oil, neroli oil, nutmeg oil, oakmoss absolute, olibanum oil, opoponax oil, orange flower absolute, orange oil, orange oil bitter, orange oil sweet, orris concrete, osmanthus flower absolute, palmarosa oil, parsley leaf oil, patchouli oil, pennyroyal oil, pepper oil black, pepper white, peppermint oil, Peru balsam oil, Peru balsam resinoid, petitgrain oil, pimena leaf oil, pine needle oil, pink pepper extract, rose absolute, rose oil, rosemary oil, rosewood oil, rum extract, saffron oil, sage oil, sandalwood oil, spearmint oil, star anise oil, styrax oil, styrax resinoid, sweet bay leaf oil, tagete oil, thyme absolute, thyme oil, tonka bean absolute, tuberose absolute, vanilla absolute, vanilla CO₂ extract, verbena oil, violet leaves absolute, wintergreen oil, ylang ylang oil, and yuzu peel oil.

In the present invention, the wording "comprising"/"comprises" also encompasses the expressions "consisting of"/"consists of" and "essentially consisting of"/"essentially consists of".

The wording "oil" used in the present invention means "essential oil" which is a concentrated hydrophobic liquid of an aromatic plant or "essence" which is a substance obtained from a plant containing its characteristic olfactory properties in concentrated form. Similarly, the term "absolute" refers to an oily mixture extracted from a plant which is concentrated.

A "CO₂ extract" in accordance with the present invention represents an extract of a plant resulting from using supercritical carbon dioxide.

The above compounds may be obtained through enfleurage, steam distillation, primary solvent extraction, CO₂ supercritical fluid extraction and/or cold pressing and are commercially available.

In the present invention, the location of the composition in the drinking vessel after spraying is not particularly limited as long as it is on the inside of the drinking vessel. The inside of the drinking vessel refers to the part of the drinking vessel which is adjusted to hold a liquid. Preferably, the composition is dispersed in the inside of the drinking vessel. In the present invention, the drinking vessel does not contain liquid prior to spraying the composition on the inside of the drinking vessel.

The means for spraying the composition on the inside of the drinking vessel is not particularly limited as long as it can provide the composition in a spray form in an amount of from 50 µl to 300 µl. Preferably, a perfume vial is used as a sprayer.

In the present invention, the composition is sprayed on the inside of the drinking vessel in an amount of from 50 µl to 300 µl, preferably from 70 µl to 200 µl. When using less than 50 µl, the amount of the composition may not be sufficient for providing a scent on the inside of a drinking vessel for a long time. Further, when the amount exceeds 300 µl, the smell of the composition might be overpowering.

The solvent used in the present invention is not particularly limited as long as it can dissolve the compound used in the present invention. In an embodiment, the solvent is at least one of benzyl alcohol, diacetin, ethanol, isopropyl alcohol, propanediol, triacetin, triethyl citrate, and water. Preferably, the solvent is at least one of ethanol, propanediol, triethyl citrate, and water.

In a further preferred embodiment, at least one of ethanol, triethyl citrate and propanediol is used as a solvent, since these solvents can easily dissolve the compound used in the composition according to the present invention.

In an embodiment, the solvent is ethanol. When ethanol is used, an alcoholic scent can be provided on the inside of the drinking vessel. This is advantageous in case that the scent of an alcoholic beverage is desired. After spraying the composition comprising ethanol as solvent on the inside of the drinking vessel, water or a carbonated beverage may for example be added to the inside of the drinking vessel. By this combination of composition and water or a carbonated beverage, the taste of an alcoholic beverage may be experienced although only a small amount of alcohol has been used.

In another embodiment of the present invention, the solvent is triethyl citrate or propanediol. By employing triethyl citrate or propanediol, the compound can be easily dissolved while avoiding the usage of ethanol. After spraying such a composition on the inside of a drinking vessel, water or a carbonated beverage may be added to the inside of the drinking vessel such that a non-ethanolic drinking experience can be created. By the combination of spraying the composition and adding liquid thereafter, not only retro nasal perception, but also orthonasal olfaction is stimulated which creates a new drinking experience.

The amount of the solvent in the present invention is from 50 vol% to 99 vol%, preferably from 75 vol% to 97 vol%, based on the composition. When using less than 50 vol% of the solvent in the composition, the compound may not be sufficiently dissolved. On the other hand, an amount of the solvent exceeding 99 vol% may negatively influence the scent provided on the inside of the drinking vessel. According to the present invention, a compound is comprised in an amount of from 1 vol% to 50 vol% based on the composition. Preferably, the amount of the compound is from 3 vol% to 25 vol% based on the composition. When using less than 1 vol% of the compound in the composition, the scent provided on the inside of the drinking vessel may be negatively dominated by other substances comprised in the composition. On the other hand, when the amount of the compound exceeds 50 vol%, the compound may not be sufficiently dissolved. In an embodiment, an excellent solubility of the compound may be achieved by using up to 50 vol% of said compound in the composition.

According to an embodiment of the present invention, the composition comprises ambrette seed CO₂ extract, angelica root oil, bergamot oil, cinnamon leaf oil, coriander oil, juniper berry oil, lemon oil, lime oil, pink pepper extract, and pepper oil black as the compound. Due to said composition, the drinking experience of a "virgin gin" can be achieved. This effect may even be emphasized when adding tonic water to the drinking vessel after spraying the above composition. By the combination of spraying the above specific composition and adding liquid, such as tonic water, thereafter, the taste of a "virgin gin" is generated not only due to retro nasal perception, but also based on orthonasal olfaction such that a new drinking experience can be achieved.

The drinking vessel used in the present invention is selected from a cup, a mug, a tumbler, a cocktail glass, a champagne glass, a sherry glass or a wine glass.

The material of the drinking vessel can for example be ceramic, glass, paper or plastic. Preferably, the drinking vessel is made of glass.

Preferably, a champagne glass or a wine glass is used as the drinking vessel in the present invention, since these forms advantageously distribute the scent on the inside of the drinking vessel.

In the present invention, water, a carbonated beverage, wine or sparkling wine is added to the inside of the drinking vessel after spraying the composition on the inside of the drinking vessel. By first spraying the composition and then adding water, a carbonated beverage, wine or sparkling wine, a new drinking experience can be created. Specifically, the odor of the drink resulting from the above order does not only emanate through the oral cavity, but also the dimension of orthonasal olfaction is added during the drinking process.

Preferably, soda water is used as water in the present invention. The carbonated beverage is preferably selected from tonic water, ginger ale, lemonade and cola.

The use of soda water or a carbonated beverage is preferred when a drinking experience of low ethanol amount or a non-ethanolic drinking experience is desired. Specifically, the combination of adding soda water or a carbonated beverage after spraying the composition and using ethanol as solvent in the composition creates a drinking experience of low ethanol amount. Further, when soda water or a carbonated beverage is added after spraying the composition, a non-ethanolic drinking experience can be achieved by using for example triethyl citrate or propanediol as solvent in the composition. By the combination of spraying the composition and adding liquid thereafter, not only retro nasal perception, but also orthonasal olfaction is stimulated which creates a new drinking experience. According to another embodiment, wine or sparkling wine is added to the inside of the drinking vessel after spraying the composition on the inside of the drinking vessel. Due to the combination of spraying the composition on the inside of the drinking vessel and adding wine or sparkling wine afterwards, the aroma of the wine or sparkling wine is influenced by the scent induced by the composition which is achieved not only by retro nasal perception, but also by orthonasal olfaction. Thus, a drinking experience different from only drinking wine or sparkling wine can be achieved.

In the present invention, water, the carbonated beverage, wine or sparkling wine is added to the inside of the drinking vessel after waiting for at least 3 s, preferably for at least 5 s, after spraying the composition. When the waiting time is shorter than 3 s, the time may not be sufficient for distributing the scent inside the drinking vessel. On the other hand, the waiting time is less than 2 minutes, more preferred less than 1 minute, since a waiting time of 2 minutes or more might lead to evaporation of a part of the scent. Optionally, before adding water, the carbonated beverage, wine or sparkling wine, the orthonasal olfactive experience can be appreciated by smelling the glass.

According to the present invention, the composition is sprayed on the inside of the drinking vessel. Afterwards, water, a carbonated beverage, wine or sparkling wine is added. The order of providing the composition and water, the carbonated beverage, wine or sparkling wine is important. Specifically, the scent is distributed inside the drinking vessel immediately upon spraying. Then, when adding water, a carbonated beverage, wine or sparkling wine, an atmosphere of the distributed scent is already present on the inside of the drinking vessel. Therefore, when drinking from the drinking vessel, the drinking experience results from a combination of the distributed scent and of water or of the aroma of the carbonated beverage, wine or sparkling wine stimulating not only retro nasal perception, but also orthonasal olfaction. In contrast, when the composition is applied after providing water, a carbonated beverage, wine or sparkling wine into a drinking vessel or is even added to water, a carbonated beverage, wine or sparkling wine before being added to a drinking vessel in an amount of 50 µl to 300 µl in accordance with the present invention, the scent cannot distribute inside the drinking vessel such that only retro nasal perception is stimulated.

In the present invention, a scent is provided on the inside of a drinking vessel. Immediately upon providing the scent, it is distributed in the inside of the drinking vessel. Into the drinking vessel in such a state, water, a carbonated beverage, wine or sparkling wine is added. When using a liquid having no specific odor, like water, the scent distributed in the drinking vessel induces a taste in the odorless liquid, thereby achieving a different drinking experience compared to only drinking said odorless liquid.

Further, for example a carbonated beverage, wine or sparkling wine already has a wide range of aromas. By combining a carbonated beverage, wine or sparkling wine with the scent provided in the present invention, a drinking experience different from only drinking a carbonated beverage, wine or sparkling wine can be created. Specifically, due to the combination of spraying the composition and adding liquid thereafter, not only retro nasal perception, but also orthonasal olfaction is stimulated. This leads the way for creative and unconventional combinations for new drinking experiences.

The present invention is more specifically explained below by an example. However, the present invention is not limited to this example.

Below, one combination of compounds is shown. The compounds used in the combination were purchased. Said combination provides the scent of the cocktail "virgin gin".

### Combination of compounds: Virgin gin

ambrette seed CO₂ extract,
angelica root oil,
bergamot oil,
cinnamon leaf oil,
coriander oil,
juniper berry oil,
lemon oil,
lime oil,
pink pepper extract, and
pepper oil black.

Depending on the drinking experience desired, at least one of benzyl alcohol, diacetin, ethanol, isopropyl alcohol, propanediol, triacetin, triethyl citrate, and water can be used as solvent for the above combination. When employing at least one of benzyl alcohol, diacetin, isopropyl alcohol, propanediol, triacetin, triethyl citrate, and water, a basis for a non-ethanolic drinking experience can be created. On the other hand, the above combination together with ethanol as solvent provides a basis for a slightly ethanolic drinking experience. By the combination of spraying the above specific composition and adding liquid thereafter, the taste of a "virgin gin" is generated not only due to retro nasal perception, but also based on orthonasal olfaction such that a new drinking experience can be achieved.

## Claims

1. A method for providing a beverage, comprising the steps of:
providing a drinking vessel selected from a cup, a mug, a tumbler, a cocktail glass, a champagne glass, a sherry glass or a wine glass,
spraying a composition on the inside of the drinking vessel in an amount of from 50 µl to 300 µl, wherein the drinking vessel does not contain liquid prior to spraying the composition on the inside of the drinking vessel,
adding water, a carbonated beverage, wine or sparkling wine to the inside of the drinking vessel after waiting for at least 3 s till less than 2 minutes after having sprayed the composition on the inside of the drinking vessel,
wherein the composition comprises
a solvent in an amount of from 50 vol% to 99 vol% based on the composition, and
a compound in an amount of from 1 vol% to 50 vol% based on the composition, wherein the compound is at least one member selected from the group consisting of agarwood oil, algae absolute green, almond oil sweet, ambrette seed CO₂ extract, ambrette seed oil, amyris oil, angelica root oil, anise oil, armoise oil, basil oil, beeswax absolute, benzoin absolute, benzoin resinoid, bergamot oil, birch tar oil, blackcurrent absolute, buchu oil, caraway seed oil, cardamom absolute, cardamom oil, carrot seed oil, cassia bark oil, cassia leaf oil, cassis bud oil, cedarwood oil, cedar leaf oil, celery seed oil, chamomile oil, cinnamon bark oil, cinnamon leaf oil, citronella oil, clary sage absolute super, clary sage oil, clove bud oil, clove leaf oil, cocoa absolute, coffee bean extract, cognac oil, copaiba balsam oil, coriander oil, cornmint oil redistilled, cumin seed oil, cypress oil, cypriol oil, elemi oil, elderflower absolute, elderflower oil, estragon oil, eucalyptus oil, fennel oil, fenugreek absolute, fenugreek resinoid, galbanum oil, galbanum resinoid, geranium oil, ginger CO₂ extract, ginger oil, grapefruit oil expressed, guaiac wood oil, honey absolute, hyssop oil super, immortelle flower absolute, jasmine CO₂ extract, jasmine sambac absolute, juniper berry oil, labdanum oil, lavandin abrialis oil, lavandin oil grosso, lavender absolute, lavender oil, lavender oil spike, lemon cedrat oil, lemon oil, lemongrass oil, lemon mint oil, lime oil, liquorice, litsea cubeba fruit oil, magnolia alba flower oil, mandarin oil, mate yerba absolute, mentha citrata oil, mimosa absolute, myrrh resinoid, myrtle oil, neroli oil, nutmeg oil, oakmoss absolute, olibanum oil, opoponax oil, orange flower absolute, orange oil, orange oil bitter, orange oil sweet, orris concrete, osmanthus flower absolute, palmarosa oil, parsley leaf oil, patchouli oil, pennyroyal oil, pepper oil black, pepper white, peppermint oil, Peru balsam oil, Peru balsam resinoid, petitgrain oil, pimena leaf oil, pine needle oil, pink pepper extract, rose absolute, rose oil, rosemary oil, rosewood oil, rum extract, saffron oil, sage oil, sandalwood oil, spearmint oil, star anise oil, styrax oil, styrax resinoid, sweet bay leaf oil, tagete oil, thyme absolute, thyme oil, tonka bean absolute, tuberose absolute, vanilla absolute, vanilla CO₂ extract, verbena oil, violet leaves absolute, wintergreen oil, ylang ylang oil, and yuzu peel oil.

2. The method according to claim 1,
wherein the solvent is at least one of benzyl alcohol, diacetin, ethanol, isopropyl alcohol, propanediol, triacetin, triethyl citrate, and water.

3. The method according to claim 1 or 2,
wherein the solvent is at least one of ethanol, propanediol, triethyl citrate, and water.

4. The method according to any one of claims 1 to 3,
wherein the solvent is ethanol.

5. The method according to any one of claims 1 to 3,
wherein the solvent is triethyl citrate or propanediol.

6. The method according to any one of claims 1 to 5,
wherein the drinking vessel is made of glass.

7. The method according to any one of claims 1 to 6,
wherein the composition comprises
ambrette seed CO₂ extract, angelica root oil, bergamot oil, cinnamon leaf oil, coriander oil, juniper berry oil, lemon oil, lime oil, pink pepper extract, and pepper oil black.

8. The method according to any one of claims 1 to 7, wherein the amount of the compound is from 3 vol% to 25 vol% based on the composition.

## Patentansprüche

1. Verfahren zum Bereitstellen eines Getränks, umfassend die Schritte:
Bereitstellen eines Trinkgefäßes, ausgewählt aus einer Tasse, einem Becher,
einem Krug, einem Cocktailglas, einem Champagnerglas, einem Sherryglas oder einem Weinglas,
Sprühen einer Zusammensetzung auf die Innenseite des Trinkgefäßes in einer Menge von 50 µl bis 300 µl, wobei das Trinkgefäß keine Flüssigkeit vor dem Sprühen der Zusammensetzung auf die Innenseite des Trinkgefäßes enthält,
Zugeben von Wasser, einem Sprudelgetränk, Wein oder Schaumwein zu der Innenseite des Trinkgefäßes nach Warten für mindestens 3 s bis weniger als 2 Minuten, nachdem die Zusammensetzung auf die Innenseite des Trinkgefäßes gesprüht worden ist,
wobei die Zusammensetzung umfaßt
ein Lösungsmittel in einer Menge von 50 Vol.-% bis 99 Vol.-%, bezogen auf die Zusammensetzung, und
eine Verbindung in einer Menge von 1 Vol.-% bis 50 Vol.-%, bezogen auf die Zusammensetzung, wobei die Verbindung mindestens ein Mitglied ist, ausgewählt aus der Gruppe, bestehend aus Agarholzöl, Algen absolut grün, Mandelöl süß, Ambrettesamen-CO₂-Extrakt, Ambrettesamenöl, Amyrisöl, Angelikawurzelöl, Anisöl, Armoiseöl, Basilikumöl, Bienenwachs absolut, Benzoe absolut, Benzoinresinoid, Bergamotteöl, Birkenteeröl, Schwarzstrom absolut, Buchuöl, Kümmelöl, Kardamom absolut, Kardamomöl, Karottensamenöl, Cassia Rindenöl, Cassia-Blattöl, Cassis-Knospenöl, Zedernholzöl, Zedernblattöl, Selleriesamenöl, Kamillenöl, Zimtrindenöl, Zimtblattöl, Citronellaöl, Muskatellersalbei absolut super, Muskatellersalbeiöl, Nelkenknospenöl, Gewürznelke Blattöl, Kakao-Absolut, Kaffeebohnen-Extrakt, Cognac-Öl, Copaiba-Balsamöl, Korianderöl, Mais-Minz-Öl destilliert, Kreuzkümmelöl, Zypressenöl, Cypriol-Öl, Elemi-Öl, Holunderblüten-Absolut, Holunderblütenöl, Estragonöl, Eukalyptusöl, Fenchel Öl, Bockshornklee absolut, Bockshornklee Resinoid, Galbanum Öl, Galbanum Resinoid, Geranienöl, Ingwer CO₂ Extrakt, Ingwer Öl, Grapefruitöl ausgedrückt, Guajak Holzöl, Honig absolut, Ysop Öl Super, Immortelle Blume Absolut, Jasmin CO₂ Extrakt, Jasmin Sambac Absolut , Wacholderbeerenöl, Labdanumöl, Lavandin-Abrialis-Öl, Lavandin-Öl Grosso, Lavendel-Absolut, Lavendelöl, Lavendelöl-Spike, Zitronen-Cedrat-Öl, Zitronenöl, Zitronengrasöl, Zitronen-Minzöl, Limettenöl, Lakritz, Litsea Cubeba-Fruchtöl, Magnolie Alba-Blütenöl, Mandarinenöl, Mate Yerba Absolue, Mentha Citrata Öl, Mimosa Absolue, Myrrhenresinoid, Myrtenöl, Neroliöl, Muskatnussöl, Eichenmoos Absolut, Olibanumöl, Opoponaxöl, Orangenblüten Absolue, Orangenöl, Orangenöl Bitter, Orangenöl süß, Irisbeton, Osmanthusblüte absolut, Palmarosaöl, Petersilienblattöl, Patschuliöl, Pennyroyalöl, Pfefferöl schwarz, Pfefferweiß, Pfefferminzöl, Peru-Balsamöl, Peru-Balsam-Resinoid, Petitgrainöl, Pimena-Blattöl, Kiefer Nadelöl, rosa Pfefferextrakt, Rosen-Absolut, Rosenöl, Rosmarinöl, Rosenholzöl, Rum-Extrakt, Safranöl, Salbeiöl, Sandelholzöl, grüne Minzeöl, Sternanisöl, Styraxöl, Styraxharzid, süßes Lorbeerblattöl, Tagete Öl, Thymian absolut, Thymianöl, Tonkabohne Absolut, Tuberose Absolut, Vanille Absolut, Vanille CO₂ Extrakt, Eisenkrautöl, Veilchenblätter Absolut, Wintergrünöl, Ylang Ylang Öl und Yuzu Peel Öl.

2. Verfahren gemäß Anspruch 1, wobei das Lösungsmittel mindestens eines von Benzylalkohol, Diacetin, Ethanol, Isopropylalkohol, Propandiol, Triacetin, Triethylcitrat und Wasser ist.

3. Verfahren gemäß Anspruch 1 oder 2, wobei das Lösungsmittel mindestens eines von Ethanol, Propandiol, Triethylcitrat und Wasser ist.

4. Verfahren gemäß einem der Ansprüche 1 bis 3, wobei das Lösungsmittel Ethanol ist.

5. Verfahren gemäß einem der Ansprüche 1 bis 3, wobei das Lösungsmittel Triethylcitrat oder Propandiol ist.

6. Verfahren gemäß einem der Ansprüche 1 bis 5, wobei das Trinkgefäß aus Glas ist.

7. Verfahren gemäß einem der Ansprüche 1 bis 6, wobei die Zusammensetzung Ambrettesamen CO₂ Extrakt, Angelikawurzelöl, Bergamottenöl, Zimtblattöl, Korianderöl, Wacholderbeerenöl, Zitronenöl, Limettenöl, Rosapfeffer-Extrakt und Pfefferölschwarz. Umfaßt.

8. Verfahren gemäß einem der Ansprüche 1 bis 7, wobei die Menge der Verbindung von 3 Vol.-% bis 25 Vol.-%, bezogen auf die Zusammensetzung, ist.

## Revendications

1. Procédé pour fournir une boisson, comprenant les étapes consistant à :
fournir un récipient permettant de boire sélectionné parmi une tasse, un mug, un verre, un verre à cocktail, une flûte ou coupe à champagne, un verre à sherry ou un verre à vin,
pulvériser une composition sur l'intérieur du récipient permettant de boire, en une quantité allant de 50 µl à 300 µl, où le récipient permettant de boire ne contient pas de liquide avant la pulvérisation de la composition à l'intérieur de celui-ci,
ajouter de l'eau, une boisson pétillante, du vin ou du vin pétillant au récipient permettant de boire après avoir attendu au moins 3 secondes mais moins de 2 minutes après avoir pulvérisé la composition à l'intérieur du récipient permettant de boire,
dans lequel la composition comprend
un solvant en une quantité allant de 50% en volume à 99% en volume sur base de la composition, et
un composé en une quantité allant de 1% en volume à 50% en volume sur base de la composition, dans lequel le composé est au moins un composé choisi parmi le groupe consistant en de l'huile de bois d'agar, de l'absolue d'algue verte, de l'huile d'amande douce, de l'extrait CO₂ de graines d'ambrette, de l'huile de graines d'ambrette, de l'huile d'amyris, de l'huile de racine d'angélique, de l'huile d'anis, de l'huile d'armoise, de l'huile de basilic, de l'absolue de cire d'abeille, de l'absolue de benjoin, du résinoïde de benjoin, de l'huile de bergamote, de l'huile de goudron de bouleau, de l'absolue de cassis, de l'huile de buchu, de l'huile de graines de carvi, de l'absolu de cardamone, de l'huile de cardamone, de l'huile de graine de carotte, de l'huile d'écorce de cassia, de l'huile de feuilles de cassia, de l'huile de bourgeons de cassis, de l'huile de bois de cèdre, de l'huile de feuille de cèdre, de l'huile de graine de céleri, de l'huile de camomille, de l'huile d'écorce de cannelle, de l'huile de feuille de cannelle, de l'huile de citronnelle, de l'absolue de sauge sclarée super, de l'huile de sauge sclarée, de l'huile de clou de girofle, de l'huile de feuille de girofle, de l'absolue de cacao, de l'extrait de grain de café, de l'huile de cognac, de l'huile de baume de copahu, de l'huile de coriandre, de l'huile de menthe des champs redistillée, de l'huile de graines de cumin, de l'huile de cyprès, de l'huile de cypriol, de l'huile d'élémi, de l'absolue de fleur de sureau, de l'huile de fleur de sureau, de l'huile d'estragon, de l'huile d'eucalyptus, de l'huile de fenouil, de l'absolue de fenugrec, du résinoïde de fenugrec, de l'huile de galbanum, du résinoïde de galbanum, de l'huile de géranium, de l'extrait CO₂ de gingembre, de l'huile de gingembre, de l'huile de pamplemousse exprimée à froid, de l'huile de bois de gaïac, de l'absolue de miel, de l'huile d'hysope super, de l'absolue de fleur d'immortelle, de l'extrait CO₂ de jasmin, de l'absolue de jasmin sambac, de l'huile de baie de genévrier, de l'huile de labdanum, de l'huile de lavandin abrialis, de l'huile de lavandin grosso, de l'absolue de lavande, de l'huile de lavande, de l'huile de lavande aspic, de l'huile de cédrat citronnée, de l'huile de citron, de l'huile de citronnelle, de l'huile de menthe citronnée, de l'huile de citron vert, de la réglisse, de l'huile de fruit de Litsée citronnée, de l'huile de fleur de magnolia alba, de l'huile de mandarine, de l'absolue de yerba maté, de l'huile de menthe bergamote, de l'absolue de mimosa, du résinoïde de myrrhe, de l'huile de myrte, de l'huile de néroli, de l'huile de noix de muscade, de l'absolue de mousse de chêne, de l'huile d'encens, de l'huile d'opoponax, de l'absolue de fleur d'oranger, de l'huile d'orange, de l'huile d'orange amère, de l'huile d'orange douce, de la concrète d'iris, de l'absolue de fleur d'osmanthus, de l'huile de palmarosa, de l'huile de feuille de persil, de l'huile de patchouli, de l'huile de menthe pouliot, de l'huile de poivre noir, du poivre blanc, de l'huile de menthe poivrée, de l'huile de baume du Pérou, du résinoïde de baume du Pérou, de l'huile de petit-grain, de l'huile de feuille de Bay Saint-Thomas, de l'huile d'aiguille de pin, de l'extrait de poivre rose, de l'absolue de rose, de l'huile de rose, de l'huile de romarin, de l'huile de bois de rose, de l'extrait de rhum, de l'huile de safran, de l'huile de sauge, de l'huile de bois de santal, de l'huile de menthe verte, de l'huile de badiane, de l'huile de styrax, du résinoïde de styrax, de l'huile de feuille de laurier, de l'huile de tagète, de l'absolue de thym, de l'huile de thym, de l'absolue de fève de tonka, de l'absolue de tubéreuse, de l'absolue de vanille, de l'extrait CO2 de vanille, de l'huile de verveine, de l'absolue de feuilles de violette, de l'huile de glathérie, de l'huile d'ylang-ylang et de l'huile de zeste de yuzu.

2. Procédé selon la revendication 1, dans lequel le sovlant est au moins l'un parmi l'alcool benzylique, la diacétine, l'éthanol, l'isopropanol, le propanediol, la triacétine, le citrate de triéthyle et l'eau.

3. Procédé selon la revendication 1 ou 2, dans lequel le solvant est au moins l'un parmi l'éthanol, le propanediol, le citrate de triéthyle et l'eau.

4. Procédé selon l'une quelconque des revendications 1 à 3, dans lequel le solvant est l'éthanol.

5. Procédé selon l'une quelconque des revendications 1 à 3, dans lequel le solvant est le citrate de triéthyle ou le propanediol.

6. Procédé selon l'une quelconque des revendications 1 à 5, dans lequel le récipient permettant de boire est constitué de verre.

7. Procédé selon l'une quelconque des revendications 1 à 6, dans lequel la composition comprend de l'extrait CO₂ de graines d'ambrette, de l'huile de racine d'angélique, de l'huile de de feuille de cannelle, de l'huile de coriandre, de l'huile de baie de genévrier, de l'huile de citron, de l'huile de citron vert, de l'extrait de poivre rose et de l'huile de poivre noir.

8. Procédé selon l'une quelconque des revendications 1 à 7, dans lequel la quantité de composé se situe dans l'intervalle allant de 3% en volume à 25% en volume, sur base de la composition.
